# EUROPEAN PATENT SPECIFICATION

(11) **EP 2 083 379 B1**
(45) Date of publication and mention of the grant of the patent: **07.04.2021**
(21) Application number: 07829990.6
(22) Date of filing: 17.10.2007
(51) Int. Cl.: G06N 5/04, G06N 3/00, G06N 99/00

(54) **ACTIVE STUDYING SYSTEM, METHOD AND PROGRAM**
AKTIV-STUDIERSYSTEM, VERFAHREN UND PROGRAMM
SYSTÈME, PROCÉDÉ ET PROGRAMME D'ÉTUDE ACTIVE

(30) Priority: 19.10.2006 JP 2006284660
(43) Date of publication of application: 29.07.2009
(73) Proprietor: NEC Corporation, Minato-ku Tokyo 108-8001 (JP)
(72) Inventor: KUROIWA, Yukiko, Minato-ku Tokyo 1088001 (JP); YAMASHITA, Yoshiko, Minato-ku Tokyo 1088001 (JP); ASOGAWA, Minoru, Minato-ku Tokyo 1088001 (JP)
(74) Representative: Betten & Resch
(86) International application number: PCT/JP2007/070256
(87) International publication number: WO 2008/047835

(56) References cited:
- JP-A- 08 202 553
- Xiaojin Zhu ET AL: "Semi-Supervised Learning with Graphs", DOCTORAL THESIS Language Technologies Institute School of Computer Science Carnegie Mellon University, 31 May 2005 (2005-05-31), XP055129621, Retrieved from the Internet: URL:http://pages.cs.wisc.edu/~jerryzhu/pub /thesis.pdf [retrieved on 2014-07-17]
- RONG LIU ET AL: "Graph-based Semi-supervised Learning Algorithm for Web Page Classification", INTELLIGENT SYSTEMS DESIGN AND APPLICATIONS, 2006. ISDA '06. SIXT H INTERNATIONAL CONFERENCE ON, IEEE, PI, 31 October 2006 (2006-10-31), pages 856-860, XP031022964, ISBN: 978-0-7695-2528-0
- YAMASHITA K. ET AL.: 'Nodo Gakushuho ni yoru Soyaku Screening -Ruien Tanpakushitsu no Ligand Joho o Mochiita GPCR Ligand Tansaku-' KOZO KASSEI SOKAN SYMPOSIUM KOEN YOSHISHU vol. 33RD, 08 November 2005, pages 63 - 66, XP003022214
- Liu ET AL: "Graph-based Semi-supervised Learning Algorithm for Web Page Classification - IEEE Conference Publication, Abstract", , 18 October 2006 (2006-10-18), XP055444480, Retrieved from the Internet: URL:http://ieeexplore.ieee.org/document/40 21776/?reload=true [retrieved on 2018-01-25]

## Description

### TECHNICAL FIELD"

The present invention relates to a machine learning technique and, in particular, to an active learning system, method and program.

### BACKGROUND ART

The active learning system is a form of the machine learning technique in which a student (computer) can actively select learning data. The active learning, which can improve the efficiency of learning in the meaning of the number of data and amount of calculation, attracts attention as the technique that is suited to screening by which a compound having an activity to a given protein is discovered out of a huge variety of compounds in a drug design, for example (refer to Literature-1, for example).

The data handled by the active learning system is expressed by a descriptor (attribute) and a label. The descriptor features the structure etc. of the data, and the label represents the state relating to an event of the data. For example, in the case of screening in the drug design, each individual compound data is specified by a plurality of descriptors that describe presence or absence of a specific partial structure and a variety of physical-chemical constants, such as number of the specific partial structures and molecular weight. The label is used to show the presence or absence of an activity or intensity of the activity to a given protein, for example. If the possible value of the label is a discrete value, such as presence or absence of the activity, the label is referred to as class. On the other hand, if the possible value of the label is a continuous value such as the intensity of activity, the label is referred to as function value. Here, a set of data for which the level value is known is referred to as known data, whereas the a set of data for which the value of data is unknown is referred to as unknown data.

The learning algorithm handled by the active learning system creates a single or a plurality of rules by using known data. The rule predicts the label value of data for an input of the descriptor of arbitrary data, and is a decision tree, a support vector machine (SVM), a neural network etc., for example. The predicted value is not necessarily the label value itself used in the learning. That is, even if the label value is a discrete value, the predicted value is not necessarily a discrete value. This is because even if the label value is a binary {0, 1}, for example, the learning algorithm can predict that the predicted value is 0.8 etc. In addition, if a plurality of rules are created, the predicted value has an integrated value by calculating the average etc. of values even if the value predicted by each rule is a binary {0, 1}. Here, for creating a plurality of rules, there is a technique of ensemble learning, for example, wherein bagging and boosting are known (for example, refer to Literature-3 and Literature-4).

In the conventional active learning, the initial learning is performed using known data which is selected at random and for which the actual value of the label is investigated by an experiment or investigation. The active learning system calculates a predicted value by using the rule created by learning with respect to each data of the unknown data, selects the data that may enable an efficient leaning from among the unknown data, and output the same. As to this selection method, there exist several techniques, such as the technique of selecting data of the predicted value that is close to the desired label value, and the technique of selecting using a specific function with respect to the predicted value (for example, refer to Literature-1, Literature-2 and Patent Publication-1) .

The actual value of the label is investigated by experiment etc. and investigation with respect to the above output data, and the result thereof is fed back to the active learning system. The active learning system removes from among the unknown data the data for which the actual value of the label is determined, mixes the same with the known data, and again iterates the operation similar to the above. That is, the rule is learned using the data selected again from the known data, and is applied to the unknown data, and the selection and output of the data is performed based on the result of the prediction. Such repetition of the processing is continued until a predetermined termination condition is satisfied.

### Literature-1

"Support Vector Machine for Active Learning in the Drug Discovery Process", by Warmuth, in article "Journal of Chemical Information Science", issued in 2003, Vol. 43-2, pp.667-673.

### Literature-2

"Query Learning Strategies using Boosting and Bagging", by Naoki ABE and Hiroshi MAMIZUKA" in the international conference proceedings, "Proceedings of The 15-th International Conference onMachine Learning", issued in 1998, pp.1-9.

### Literature-3

"Bagging Predictors" by Breiman in article "Machine Learning" issued in 1996, Vol. 24-2, pp.123-140.

### Literature-4

"A decision-theoretic generalization of on-line learning and an application to boosting", by Freund and Shapire in the international proceedings, " Proceedings of the second European conference on computational learning theory", issued in 1995, pp.23-37.

The problem in the conventional active learning system is that it is the premise that there exist data of a variety of label values in the known data, whereby even if the system is started, the desired label value cannot be efficiently learned when there is no or very few data (desired data) of a specific label value (desired label value).

Document "Semi-Supervised Learning with Graphs" by Xiaojin Zhu Et Al, DOCTORAL THESIS Language Technologies Institute School of Computer Science, Carnegie Mellon University, 31 May 2005 discloses such an active learning system.

The reason therefor is that if there exists no or very few desired data in the known data, the learning algorithm has a tendency to generate a value other than the desired label value and the predicted rule with respect to arbitrary data, thereby having a tendency to estimate the desired data as other than the desired level value, whereby it has substantially no difference from the selection at random. For example, if the label value is a binary {A, B}, and when there is no data of A in the known data, a rule that predicts the label B at any time is created whereby if the data is selected based on the predicted result, the selected data has substantially no difference from the data selected at random. In addition, if the label value is three-valued data {A, B, C} and the three labels represent independent events, when there is no or very few data of label A, a rule that predicts label B or label C is likely generated, whereby the desired data having label A is not predicted by the meaningful rule and selected only at random, because label A is not efficiently learned. If the label value is a continuous value, the case is similar and thus the desired label value is not learned so long as the label value in a specific range is considered as the desired label value.

The second problem in the conventional active learning system is that even if the user has supplementary information on the data, a more efficient learning cannot be achieved by using the supplementary information.

The reason therefor is that the conventional active learning system uses in the learning the known data for which the label has become clear, and the supplementary knowledge of the user other than the known data cannot be used in the system. There is a case where the user has a supplementary knowledge such as background knowledge and patent publication with respect to the field. For example, if learning is performed with respect to an active compound and an inactive compound by using screening in the drug design, a compound that is likely to have an activity can be found from the supplementary knowledge such as a literature. If the presence or absence of the activity cannot be confirmed from an experiment due to absence of the compound at hand, such a compound that is likely to have the activity is neither the known data nor the unknown data, whereby the compound cannot be handled in the conventional active leaning system. Therefore, it is impossible to perform the learning more efficiently by using information of the compound that is likely to have the activity. Moreover, if the learning is performed with respect to the active compound and inactive compound by screening, and if there is a compound that is classified into the inactive compound and yet has an activity that is a little more than the activity of the other inactive compounds, such a compound having a little activity cannot be used in the conventional active learning system unless the compound is classified as an inactive compound in the known data. Thus, it is impossible to perform the learning more efficiently by using the information on the presence of the little activity.

Document "Graph-based Semi-supervised Learning Algorithm for Web Page Classification" by RONG LIU Et Al, INTELLIGENT SYSTEMS DESIGN AND APPLICATIONS, 2006. ISDA '06. SIXT H INTERNATIONAL CONFERENCE ON, IEEE, PI, 31 October 2006, discloses a learning model where the similarity between unlabelled data is used to propagate the labels.

### SUMMARY OF THE INVENTION

The above and other objects, features and advantages of the present invention will be more apparent from the following description, referring to the accompanying drawings.

### BRIEF DESCRIPTION OF THE DRAWINGS

FIG. 1 is a block diagram of an active learning system according to an exemplary embodiment of the present invention.
FIG. 2 is a diagram showing an example of the data structure handled by the active learning system according to the exemplary embodiment of the present invention.
FIG. 3 is a flowchart showing operation of the active learning system according to the exemplary embodiment of the present invention.
FIG. 4 is a block diagram of an active learning system according to a further example
FIG. 5 is a diagram showing an example of the data structure handled by the active learning system according to a further example.
FIG. 6 is a flowchart showing operation of the active learning system according to a further example.

### BEST MODE FOR CARRYING OUT THE INVENTION

### Exemplary Embodiment]

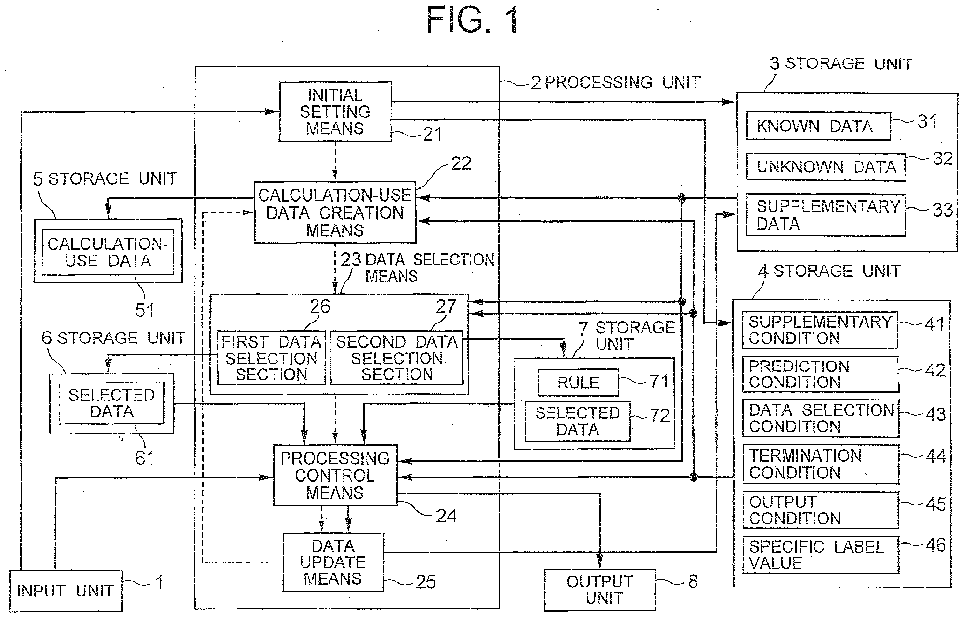

With reference to FIG. 1, an active learning system according to a first exemplary embodiment of the present invention is comprised of an input unit 1 configured by a keyboard etc. for inputting instruction and data from a user, a processing unit 2 operated by a programmed control, storage units 3-7 configured by a semiconductor memory, a magnetic disk etc., and an output unit 8 configured by a display unit etc. The storage units 3-7 need not be physically separate units, and it is possible to use the same storage unit logically partitioned as the storage units 3-7.

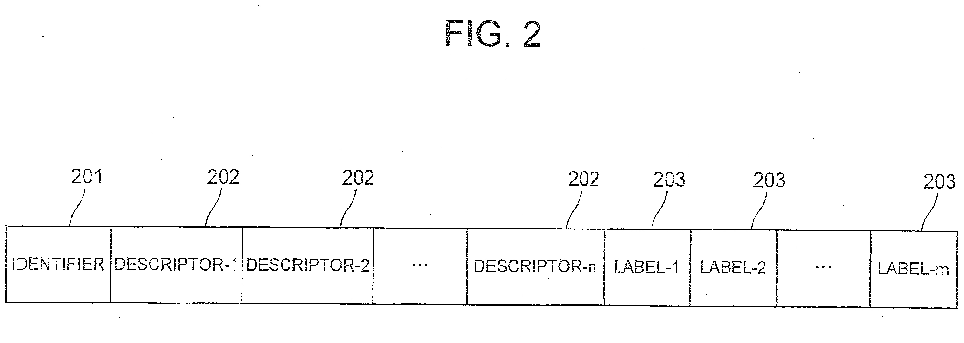

Storage unit 3 stores therein known data 31, unknown data 32 and supplementary data 33 input from the input unit 1. An example of data structure of the known data 31, unknown data 32 and supplementary data 33 is shown in FIG. 2. With reference to FIG. 2, the known data 31, unknown data 32 and supplementary data 33 are comprised of an identifier 201 that uniquely identifies the own data, at least one descriptor 202 and at least one label 203. The descriptor 202 features the structure of the own data. Here, the label 203 represents the state as to an event of the own data, and is a class or function value. The label that is a target of prediction among the at least one label 203 is herein referred to as desired label, wherein the value of desired label in the unknown data 32 is unknown (in the state before setting), whereas the value of desired label in the known data 31 is known (in the state after setting) . The value of desired label in the supplementary data 33 is in the state after the setting as in the case of known data 31; however, although the value of desired label in the known data 31 is a certain value which is actually ascertained, the value of desired label in the supplementary data 33 is an uncertain value and thus is different in this point.

It is not suitable to handle the supplementary data 33, for which the value of desired label therefor is uncertain, as the known data 31; however, the data therein which can be effectively used as the supplement of efficient learning is used. It is assumed that a compound that is supposed to have an activity from the knowledge of the user in the corresponding field and information of the literature etc. is focused in the case of leaning active compounds and inactive compounds in the screening of the drug design, for example. If the compound is at hand and can be ascertained as to the presence or absence of the activity by experiments, it maybe classified into the known data, whereas if such an experiment cannot be performed, it cannot be classified into the known data. Moreover, it is a waste to classify the same into the unknown data because the compound is likely to have the activity. In such a case, the value of desired label is set to presence of the activity to thereby handle the same as the supplementary data, thereby enabling use of the same in the learning as a so-called pseudo known data while differentiating the same from the known data that is the true known data. Similarly, if the learning is to be performed on the active compounds and inactive compounds during the screening in a drug design, a compound that has an activity which is very weak and is yet stronger as compared to other inactive compounds cannot be used in the conventional technique unless classifying the same as an inactive compound in the known data. However, in the present embodiment, handing of the same as the supplementary data for which the value of desired label is set to presence of the activity allows use of the same in the learning as the pseudo known data, while differentiating the same from the true known data.

Furthermore, it is also possible to create the supplementary data from the known data or unknown data by focusing attention to the tendency that different events possibly have similar label values to some extent so long as the different events have an affinity therebetween, and rewriting the value of desired label of the known data or unknown data with the value of another label representing the state of an event similar to the event that the desired label represents. For example, assuming, as an example of finding the active compound during screening in the drug design, the case finding a ligand compound acting on a biogenic amine receptor among G-protein conjugated receptors (GPCR) that are a target of most of the drug designs, in particular, a ligand compound acting on adrenalin, which is one of the biogenic amine receptor family, the supplementary data can be created from the known data or unknown data, such as follows. It is assumed that a label-1 among a plurality of labels represents presence or absence of the activity to adrenaline, and a label-2 represents presence or absence of the activity to histamine. In this case, the data obtained by rewriting the label-1 of the data of a specific compound, for which the label-1 is inactive or unknown and the label-2 is active, with the data of label-2 representing presence of the activity is determined as the supplementary data. This attributes to the fact that the user considers that histamine belongs to a family of biogenic amine receptors of the same GPCR as adrenalin, and that the ligand compounds are often similar to each other when the proteins are in a close relation with each other.

With reference to FIG. 1 again, storage unit 4 stores therein the control conditions input from the input unit 1. In the case of the present embodiment, the control conditions include a supplementary condition 41, a prediction condition 42, a data selection condition 43, a termination condition 44, an output condition 45 and a specific label value 46.

The supplementary condition 41 is a condition that uses the supplementary data 33 for calculation, and can use the conditions described hereinafter, for example.

Supplementary condition A: the supplementary data 33 is used from the first time up to a predetermined number, N, of repetition times.

Supplementary condition B: the supplementary data 33 is used for calculation until a number of desired data determined in advance is obtained. Here, the desired data is the known data for which the value of desired label is a desired value. The desired value is a label value that is valuable to the user. For example, if the desired value is presence or absence of the activity to a given protein and when a compound having the activity is valuable to the user, the desired value is presence of the activity.

Supplementary condition C: a part of the known data is left as evaluation data, and the supplementary data 33 is used if the prediction accuracy with respect to estimated data in the case of calculation using the known data other than the evaluation data is lower than the prediction accuracy with respect to the evaluated data in the case of calculation using the calculation-use data obtained by conversion from the known data other than the evaluation data and the supplementary data.

Supplementary condition D: instead of leaving the evaluation data in the supplementary condition C, the supplementary data 33 is used if the prediction accuracy estimated using the prediction accuracy without using the supplementary data 33 is lower than the prediction accuracy using the complementary data 33.

Supplementary condition E: follows an instruction from the user as to whether or not the supplementary data 33 is to be used.

The supplementary conditions A, B, C and D among the above supplementary conditions can be each specified as alone or in any arbitrary combination. The supplementary condition E is set as the condition to be taken into consideration at any time.

The prediction condition 42 specifies the prediction method of the data to be learned next. More concretely, it specifies whether the derivation uses calculation of the degree of similarity or the rule.

The method of deriving the data to be learned next by using the rule is similar to the conventional active learning, and the technique used in the conventional active learning can be used as it is as the prediction method. Examples of the technique used in the conventional active learning include study of the rule by using the learning, such as decision tree, neural network, support vector machine etc. and the ensemble learning, such as a bagging and a boosting, which is obtained by combination of those learnings, and performing prediction of the value of desired label of the unknown data by using the rule obtained by the learning.

On the other hand, the method of deriving the data to be learned next based on calculation of the degree of similarity is a method that is not used in the conventional active learning. More concretely, the method is such that all of the data for which the value of desired label has a specific value are selected from a set of the known data 31 (if the supplementary data 33 is used, a set of calculation-use data created from the known data 31 and supplementary data 33) as specific data, the degree of similarity between the specific data and each of the data in a set of the unknown data 32 is calculated, and the data to be learned next is selected based on the calculated degree of similarity from the set of unknown data 32.

A typical example of the specific data is the data for which the value of desired label is the desired value, i.e., desired data. The desired data is data valuable to the user, and whether it is the desired data or not is determined by the label value. If the lavel value is binary, data having one label value is the desired data. For example, in the screening in the drug design, if the label is presence or absence of the activity to a given protein, and if an active compound is valuable to the user, the active compound is the desired data. If the label has a continuous value, data having a label value within a specific range that is valuable to the user is determined as the desired data. For example, if the label is a strength of the activity with respect to a given protein, and if the data valuable to the user is data having a strength of the activity equal to or higher than a threshold, the data having a strength of the activity equal to or higher than the threshold is the desired data. Note that there is a case where data for which the value of a specific label is not the desired value is determined as the specific data, as will be described later.

Calculation of the degree of similarity is performed by comparing the descriptors of two data to be compared against each other. More concretely, if there are n descriptors in total, the n descriptors are compared against one another, and the value corresponding to the number of coincident descriptors, for example, is determined as the degree of similarity. If there are m specific data in total, an unknown data is compared against each of the specific data. As a matter of course, a statistical data that is the mean value etc. of the degrees of similarity with respect to all the specific data may be determined as the degree of similarity of the unknown data.

The data selection condition 43 specifies the method of selection of the data to be learned next. If the method of selecting the data to be learned next is to use derivation using the rule, a method similar to the selection methods used in the conventional active learning may be used, such as a method of selecting the data split in the predicted value in the ensemble learning, a method of selecting the data having a predicted value close to the desired label value, a method of selecting using a specific function with respect to the predicted value and so on. On the other hand, if the method of selecting the data to be learned next is to use calculation of the degree of similarity, a method, such as a method of selecting the data having a lowest degree of similarity may be used.

The termination condition 44 is a condition that terminates the calculation, and may use the conditions as described hereinafter, for example.

Termination condition a: terminates upon exceeding a predetermined number, N, of the repetition times.

Termination condition b: terminates upon acquisition of a predetermined number of the desired data.

Termination condition c: a part of calculation-use data is left as the evaluation data without using in the prediction, and terminates when the prediction accuracy of the evaluation data exceeds a predetermined value.

Termination condition d: a prediction accuracy is estimated, and terminates when the estimated prediction accuracy exceeds a predetermined value.

Termination condition e: terminates when a gradient of the value toward improvement (improvement curve) underruns a predetermined value.

Termination condition f: follows an instruction from the user as to whether to terminate or not.

The termination conditions a, b, c, d, and e among the above termination conditions can be each specified as alone or in an arbitrary combination. Moreover, the supplementary condition f is set as the condition to be taken into consideration at any time.

The output condition 45 specifies which of the rule created as a result of calculation, known data, and desired data is to be output. The reason for allowing the output of known data and desired data other than the created rule is that if the label is presence or absence of the activity to a given protein in the screening in a drug design, for example, the active compound for which the label is known is valuable to the user and thus output thereof has a meaning.

The specific label value 46 specifies the label to be focused and the value thereof. Typically, it specifies the label of data that is valuable to the user and the value thereof; however, may specify the opposite.

Storage unit 5 stores therein the calculation-use data 51 that are created in the processing unit 2 from the known data 31 and supplementary data 33. The method of creating the calculation-use data 51 will be described later.

Storage unit 6 stores therein the data 61 that is to be learned next and selected in calculation of the degree of similarity in the processing unit 2. Storage unit 7 stores therein the rule 71 created in the processing unit 2, and the selected data 72 selected using the rule 71 and to be learned next. The processing unit 2 includes initial settingmeans 21, calculation-use data creation means 22, data selection means 23, processing control means 24, and data update means 25.

The initial setting means 21, upon input of the known data 31, unknown data 32 and supplementary data 33 from the input unit 1, stores those in storage unit 3. The initial setting means 21, upon input of the supplementary condition 41, prediction condition 42, data selection condition 43, termination condition 44, output condition 45 and specific label value 46 from the input unit 1, stores those in storage unit 4. The known data 31, unknown data 32 and supplementary data 33 may be input independently of one another, or may be input collectively. Similarly, the supplementary condition 41, prediction condition 42, data selection condition 43, termination condition 44, output condition 45 and specific label value 46 may be input independently of one another, oar may be input collectively. The known data 31, unknown data 32 and supplementary data 33, supplementary condition 41, prediction condition 42, data selection condition 43, termination condition 44, output condition 45 and specific label value 46 that are already input may be rewritten with other input data during the period from the start to the end of calculation.

The calculation-use data creation means 22 reads the supplementary condition 41 from storage unit 4, reads the known data 31 and supplementary data 33 from storage unit 3, and creates the calculation-use data 51 to store the same in storage unit 5. More concretely, it is judged whether or not the supplementary condition 41 is satisfied, and if the condition of using the supplementary data 33 is satisfied, the supplementary data 33 and the known data 31 other than the known data having the descriptor which coincides with that of the supplementary data 33 are determined as the calculation-use data 51. On the other hand, if the condition of using the supplementary data 33 is not satisfied, the known data 31 is determined as the calculation-use data 51.

The data selection means 23 includes a first data selection section 26, and a second data selection section 27, and selectively operates either one of the two data selection sections 26 and 27 corresponding to the prediction condition 42 stored in storage unit 4. In one mode, the first data selection section 26 is operated at the start of calculation, thereafter is switched to the operation of the second data selection section 27, and operation of the second data selection section 27 is continued to the end of calculation. In another mode, the second data selection section 27 is operated from the start to the end of calculation.

The first data selection section 26 reads calculation-use data 51 from storage unit 5, reads the unknown data 32 from storage unit 3, reads the data selection condition 43 and specific label value 46 from storage unit 4, selects the specific label value 46 from a set of calculation-use data 51 as the specific data, calculates the degree of similarity of each data in the set of unknown data 32 with respect to the specific data, and selects the data to be learned next based on the calculated degree of similarity and data selection condition 43, to store the same as the selected data in storage unit 6.

The second data selection section 27 reads the calculation-use data 51 from storage unit 5, reads the unknown data 32 from storage unit 3, reads the data selection condition 43 and specific label value 46 from storage unit 4, and learns the rule for calculating, for an input of the descriptor of the arbitrary data, the value of specific label of the data based on the calculation-use data 51, applies the learned rule to a set of the unknown data 32 to thereby predict the value of specific label of each unknown data, selects the data to be learned next based on this predicted result and the data selection condition 43, and stores the same in storage unit 7 as the selected data 72 together with the created rule 71.

The processing control means 24 reads the termination condition 44 from storage unit 4 to thereby judge whether to terminate or not, and if the termination condition is satisfied, outputs the rule 71 stored in storage unit 7, the known data 31 stored in storage unit 3, and desired data etc. included in the known data 31 to the output unit 8, and terminates the calculation processing by the processing unit 2, in accordance with the output condition 45 read from storage unit 4. On the other hand, if the termination condition 44 is not satisfied, the processing control means 24 outputs, to the output unit 8, the selected data 61 stored in storage unit 6 when the first data selection section 26 is operated, and the selected data 72 stored in storage unit 7 when the second data selection section 27 is operated. Then, when the label value of the thus output data is input, the data for which the input label value is set is delivered to the data update means 25 to thereby allow the processing unit 2 to continue the calculation processing.

The data update means 25 adds, to the set of known data 31 in storage unit 3, the data for which the label value is set, and removes the corresponding original data from the set of unknown data 32.

The processing unit 2 iterates the processings of the calculation-use data creation means 22, data selection means 23, processing control means 24 and data update means 25, along the control flow shown by a dotted line in FIG. 1 until the termination condition 44 is satisfied.

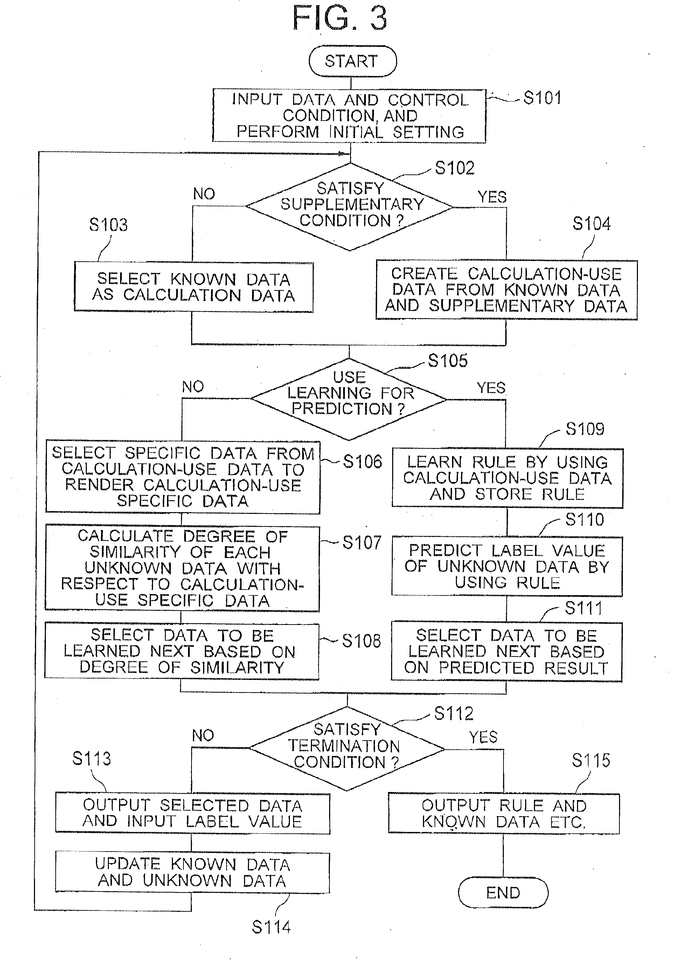

FIG. 3 is a flowchart showing overall operation of the active learning system according to the present embodiment. Hereinafter, operation of the present embodiment will be described with reference to FIGS. 1 to 3.

When the processing unit 2 is started by an instruction etc. from the input unit 1 by the user, the processing shown in the flowchart of FIG. 3 is started. The initial setting means 21 of the processing unit 2 receives the data and control condition from the input unit 1, stores the data in storage unit 3, and stores the control condition in storage unit 4 (step S101 in FIG. 3). The data thus input include three types: known data 31, unknown data 32 and supplementary data 33. These three types of data may be stored separately from one another, or may be stored without separation of data while attaching the data with the data number, uniquely assigned ID etc., as shown in FIG. 2, and storing correspondence information between the identifier 201 and the data type in a separate location. Moreover, the label may also be stored separately from the descriptor while attaching thereto the correspondence index. Note that either one of the known data 31 and supplementary data 33 may be an empty set. If the known data 31 is an empty set, the calculation-use data 51 includes only the supplementary data.

The input control condition includes the supplementary condition 41, prediction condition 42, data selection condition 43, termination condition 44, output condition 45, and specific label value 46. All of those are not the indispensable condition, and some of those may be omitted depending on the needs. For example, the specific label value 46 can be omitted, if neither the specific label value nor the specific data is used in any of the other control conditions. Although not shown in the flowchart of FIG. 3, each control condition need not be input together with the other control conditions, may be input as alone, and may also be input not only during the initial setting but also on the halfway through the calculation. For example, the prediction condition may be changed on the halfway of calculation from the condition using the degree of similarity to the condition performing the rule learning.

Subsequently, the calculation-use data creation means 22 of the processing unit 2 reads the supplementary condition 41 from storage unit 4, to judge whether or not the condition is satisfied (step S102), and stores the set of known data 31 read from storage unit 3 as the calculation-use data 51 in storage unit 5, if the supplementary condition is not satisfied (step S103) . On the other hand, if the supplementary condition 41 is satisfied, the known data 31 and supplementary data 33 are read from storage unit 3, and while storing the supplementary data 33 as the calculation-use data in storage unit 5, the remaining data left after removing the known data 31 for which the identifier coincides with that of the supplementary data 33 is additionally stored as the calculation-use data in storage unit 5 (step S104). The reason for removing the data for which the identifier coincides with that of the supplementary data 33 from the known data 31 is that there is a possibility that the user is using the supplementary data created by rewriting the label of the known data. This case is equivalent to rewriting of the label value of the known data by using the supplementary data 33.

Subsequently, the data selection means 23 of the processing unit 2 reads the prediction condition 42 from storage unit 4, and judges whether to perform processing using the degree of similarity or to perform processing of rule learning (step S105). If it is judged to perform processing using the degree of similarity, the first data selection section 26 is started, whereas if it is judged to perform processing of the rule learning, the second data selection section 27 is started.

The first data selection section 26 first selects all the data having the same label value as the specific label value 46 from the set of calculation-use data 51 stored in storage unit 5 as the specific data, and determines the same as the calculation-use specific data (step S106). Thereafter, the degree of similarity with respect to the calculation-use specific data is calculated for each data in the set of unknown data 32 stored in storage unit 3 (step S107). Finally, based on the calculated degree of similarity of each unknown data and the data selection condition 43 stored in storage unit 4, the data to be learned next is selected from the set of unknown data 32 as the selected data 61, and stored in storage unit 6 (step S108).

The second data selection section 27 first learns, for an input of the descriptor of an arbitrary data, the rule 71 for calculating the value of specific label of the arbitrary data, based on the calculation-use data 51 stored in storage unit 5, and stores the same in storage unit 7 (step S109) . Subsequently, this learned rule 71 is applied to the set of unknown data 32 stored in storage unit 3, to predict the value of the predetermined label of each unknown data (step S110) . Finally, based on the prediction result of the predetermined label of each unknown data and the data selection condition 43 stored in storage unit 4, the data to be learned next is selected from the set of unknown data 32 as the selected data 72, and is stored in storage unit 7.

Subsequently, the processing control means 24 of the processing unit 2 reads the termination condition 44 from storage unit 4, and judges whether or not it is satisfied (step S112) . Then, if the termination condition 44 is not satisfied, the data selected by the data selection means 23 is read from storage unit 6 or storage unit 7, and is output to the output unit 8, and the level value of the thus output data is input by operation of the input unit 1 by the user (step S113) . Thereafter, the data update means 25 of the processing unit 2 removes, from the unknown data 32, the data for which the label value is input, to add the same to the known data 31 (step S114) . Thereafter, the control is returned to the calculation-use data creation means 22, and processing similar to the processing as described above is iterated until the termination condition is satisfied.

In the output of selected data in step S113, the data itself may be output or the identifier 201 of the selected data may be output. Similarly, in the input of label value in step S113, the data itself including the descriptor and label may be input, or only the label value of the data may be input. Moreover, if the user wishes to attach a label to data other than the data output from the system, the user may input the label of another data so long as correspondence to the data is shown. This is because the active learning system is intended to assist the user, and to allow the user to attach the label to another data if the user judges that the selected data is improper based on the knowledge of the user himself.

At the time instant of step S113 after the control is shifted to the processing control means 24, an inquiry as to whether or not the supplementary data is to be changed may be made to the user, to allow the user to input new supplementary data. Moreover, if the label value is input by operation of the input unit 1 with respect to the supplementary data 33 that is previously input from the user, the user may be allowed to confirm, whether or not the supplementary data is to be cancelled. If the supplementary data is changed in this way, the supplementary data 33 in storage unit 3 is rewritten with new supplementary data. Moreover, the contents of the current known data 31 or the contents, number etc. of the specific data therein may be output to the output unit 8, the user may be asked whether or not the prediction condition 42 is to be changed, and the user may be allowed to input new prediction condition 42.

On the other hand, if the termination condition 44 is satisfied, the processing control means 24 of the processing unit 2 outputs the rule 71, known data 31 etc. from the output unit 8 in accordance with the output condition 45 stored in storage unit 4 (step S115), and terminates the processing. Next, operation of the present embodiment will be described in more detail assuming several situations.

As a premise, it is assumed that the data handled by the processing unit 2 has the data structure shown in FIG. 2, the label-1 is the desired label and the possible value of the label-1 is binary {A, B}. Moreover, the desired label value therein is A. For example, in the case of screening in the drug design, the label-1 corresponds to presence or absence of the activity to a given protein, and A and B correspond to presence and absence, respectively, of the activity. The purpose of the user is to find the data for which the label-1 is A from the set of unknown data 32 for which the label-1 is A more efficiently than the random selection. Here, it is premised that the value of label-1 is B for most of the known data. Therefore, the data for which the value of label-1 is B can be easily found by the random selection. On the other hand, the random selection will extremely increase the cost for finding the data for which the value of label-1 is A.

### (1) Assumed Example-1

First, a situation is assumed wherein although a sufficient number of known data for which the value of label-1 is B is prepared, there is no known data at all for which the value of label-1 is A. This corresponds to the situation wherein although there exist a large number of data for the compound without the activity to a given protein, there is no data at all for the compound having the activity.

Under such a situation, there there is the following method for efficiently finding the known data for which the value of label-1 is A.

(1-1) Processing is started using the prediction method that selects unknown data having a lowest degree of similarity with respect to the known data for which the value of label-1 is B as the candidate of data for which the value of label-1 is A, and is switched to the prediction method that learns the rule after the data for which the value of label-1 is A are collected to some extent.

Hereinafter, operation in each of the cases will be described.

### (1-1) Operation Example-1

First, in the initial setting, the known data 31 including only the data for which the value of label-1 is B, and the unknown data 32 for which the value of label-1 is unknown are stored in storage unit 3. Here, the supplementary data 33 is not used. The prediction method using the degree of similarity is specified in the prediction condition 42, and the condition of selecting the data having a lowest degree of similarity is specified in the data selection condition 43. The specific label value 46 specifies value B for the label-1.

When the processing of FIG. 3 is started, the known data 31 for which the value of label-1 is B is first created as the calculation-use data 51 (step S103). Subsequently, all the data having the specific label value, i.e., the data for which the value of label-1 is B are selectedfromthe calculation-use data 51 as the calculation-use specific data (step S106). Thereafter, the degree of similarity with respect to the calculation-use specific data is calculated for each data in the unknown data 32 (step S107) . Thereafter, the unknown data having a lowest degree of similarity with respect to the calculation-use specific data, i.e., the unknown data that least resembles the known data for which the value of label-1 is B is selected as the selected data 61 in accordance with the data selection condition 43 (step S108) . Thereafter, this selected data 61 is output to the output unit 8 by the processing control means 24, and the user investigates the value of label-1 of this selected data 61 by experiment etc., to input the same from the input unit 1 (step S113) . Here, since the selected data 61 is the data that least resembles the data for which the value of label-1 is B, the probability of this data being the data for which the value of label-1 is A is higher as compared to the case of selection at random from the set of unknown data 32. The data update means 25 removes from the unknown data 32 the data for which the value is input to label-1, and adds the same to the known data 31 (step S114) .

Operation similar to that described above is iterated, and when the calculation-use data or known data for which the value of label-1 is A are collected in number needed for the rule learning, the prediction condition 42 is switched to the prediction using the rule learning from the input unit 1, and the specific label value 46 is changed to value A of the label-1. This allows the rule tobe learned hereinafter similarly to the method of the conventional active learning system, whereby data is selected from the unknown data 32 in accordance with the learned rule. Note that, instead of switching the prediction condition 42 from the input unit 1, by setting of the condition that the switching to the rule learning is effected when the calculation-use data or known data for which the value of label-1 is A is collected in number exceeding a threshold, it is possible for the processing control means 24 to automatically switch the prediction method.

### (1-3) Operation Example-2

If the supplementary data for which the value of label-1 is A are prepared in number sufficient for the rule learning, it is possible to perform the prediction using the rule learning from the start of processing without using at all the prediction using the degree of similarity.

First, in the initial setting, the known data 31 including only data for which the value of label-1 is B, the unknown data for which the value of label-1 is unknown and the supplementary data for which the value of label-1 is A are stored in storage unit 3. In addition, the prediction method using the rule learning is specified in the prediction condition 42. The specific label value 46 specifies value A for label-1. Due to the use of the supplementary data 33, a suitable supplementary condition 41 is specified.

When the processing of FIG. 3 is started, the supplementary data for which the value of label-1 is A and the data left after removing the data for which the descriptor is the same as that of the supplementary data 33 from among the known data 31 for which the value of label-1 is B are first created as the calculation-use data 51 (step S104). Thereafter, the rule is learned using the calculation-use data 51, to store the same as the rule 71 in storage unit 7 (step S109) . Thereafter, the value of label-1 is predicted for the set of unknown data 32 by using the rule 71 (step S110), and the data to be learned next is selected based on the predicted result and the data selection condition 43, to store the same in storage unit 7 (step S111) . Then, this selected data 72 is output to the output unit 8 by the processing control means 24, and the user investigates the value of label-1 of the selected data 72 by experiment etc. , and inputs the same from the input unit 1 (step S113) . Here, if the data selection condition 43 is such that the data having a predicted value close to the desired label value is selected, for example, the probability of this data being the data for which the value of label-1 is A is higher as compared to the case of selection from the set of unknown data 32 at random. The data update means 25 removes from the unknown data 32 the data for which the value is input to the label-1, to add the same to the known data 31 (step S114) .

Operation similar to the above is iterated until the termination condition 44 is satisfied.

### (2) Assumed Example-2

Unlike the assumed example-1, a situation is assumed wherein there exist only a few known data for which the value of label-1 is A. This corresponds to the situation wherein although there are a large number of data of the compound having no activity to a given protein, there exist only a very few number of data of the compound having the activity.

Under such a situation, there are mainly following three types in the method of efficiently funding the known data for which the value of label-1 is A.
(2-1) Similarly to the operation example-1 for the assumed example-1 in the operational example-1 as described above, the processing is started using the prediction method that selects the data having a lowest degree of similarity with respect to the known data for which the value of label-1 is B as the candidate of the data for which the value of label-1 is A, and is switched to the prediction method that learns the rule when the data for which the value of label-1 is A are collected to some extent.
(2-2) The processing is started using the prediction that selects the unknown data existing in a very few number and having a highest degree of similarity with respect to the known data for which the value of label-1 is A, and is switched to the prediction method that learns the rule when the data for which the value of label-1 is A are collected to some extent.
(2-3) The supplementary data for which the value of label-1 is A are created, and combined with the known data for which the value of label-1 is A, and prediction is performed thereto from the start by using the prediction method that learns the rule.

Hereinafter, operation in each of the cases will be described.

### (2-1) Operation Example-3

First, in the initial setting, the known data 31 including only a few number of data for which the value of label-1 is A and a sufficient number of data for which the value of label-1 is B, and the unknown data 32 for which the value of label-1 is unknown are stored in storage unit 3. Here, the supplementary data 33 is not used. The prediction method using the degree of similarity is specified in the prediction condition 42, and the condition of selecting the data having a lowest degree of similarity is specified in data selection condition 43. The specific label value 46 specifies value B for label-1.

When the processing of FIG. 3 is started, the known data 31 is first stored as the calculation-use data 51 (step S103) . Thereafter, all the data having the specific label value 46, i.e., the known data for which the value of label-1 is B are selected from the calculation-use data 51 as the calculation-use specific data (step S106) . Thereafter, the degree of similarity with respect to the calculation-use specific data is calculated for each data in the unknown data 32 (step S107) . Thereafter, the unknown data having a lowest degree of similarity with respect to the calculation-use specific data, i.e., the unknown data that least resembles the known data for which the value of label-1 is B is selected as the selected data 61 (step S108) . Then, this selected data 61 is output to the output unit 8 by the processing control means 24, and the user investigates the value of label-1 of the selected data 61 by experiment etc., and inputs the same from the input unit 1 (step S113) . Here, since the selected data 61 is the data that least resembles the data for which the value of label-1 is B, the probability of this data being the data for which the value of label-1 is A is higher than the case of selection from the set of unknown data 32 at random. The data update means 25 removes from the unknown data 32 the data for which the value is input to the label-1, and adds the same to the known data 31 (step S114).

Operation similar to the above is iterated, and when the calculation-use data or known data for which the value of label-1 is A are collected in number needed for the rule leaning, the prediction condition 42 is switched to the prediction using the rule learning from the input unit 1, and the specific label value 46 is changed to value A for the label-1. Thereby, the rule is learned hereinafter similarly to the method of the conventional active learning system, and data is being selected from the unknown data 32 based on the learned rule. Instead of switching the prediction condition 42 from the input unit 1, by setting in the prediction condition itself the condition that switches to the rule learning when the calculation-use data or known data for which the value of label-1 is A are collected in number equal to or above a threshold, it is possible for the processing control means 24 to automatically change the prediction method.

### (2-2) Operation Example-4

First, in this operation example, in the initial setting, the known data 31 including only a few number of data for which the value of label-1 is A and data for which the value of label-1 is B, and the unknown data 32 for which the value of label-1 is unknown are stored in storage unit 3. In addition, the prediction method using the degree of similarity is specified in the prediction condition 42, and the condition of selecting the data having a highest degree of similarity is specified in the data selection condition 43. The specific label value 46 specifies value A for the label-1.

When the processing of FIG. 3 is started, the known data 31 including data for which the value of label-1 is A and data for which the value of label-1 is B are created as the calculation-use data 51 (step S103) . Thereafter, all the data having the specific label value 46, i.e., the unknown data that most resemble the data for which the value of label-1 is A are selected from the calculation-use data 51 as the calculation-use specific data (step S106) . Thereafter, the degree of similarity with respect to the calculation-use specific data is calculated for each data in the unknown data 32 (step S107). Thereafter, in accordance with the data selection condition 43, the unknown data having a highest degree of similarity with respect to the calculation-use specific data, i.e., the unknown data that most resembles the known data for which the value of label-1 is A, is selected as the selected data 61 (step S108) . Then, this selected data 61 is output to the output unit 8 by the processing control means 24, and the user investigates the value of label-1 of the selected data 61 by experiment etc., to input the same from the input unit 1 (step S113) . Here, since the selected data 61 is the data that most resembles the known data for which the value of label-1 is A, the probability of this data being the data for which the value of label-1 is A is higher than the case of selection from the set of unknown data 32 at random. The data update means 25 removes from the unknown data 32 the data for which the value is input to the label-1, to add the same to the known data 31 (step S114).

Operation similar to the above is iterated, and the prediction condition 42 is switched to the prediction using the rule learning from the input unit 1 when the calculation-use data or known data for which the value of label-1 is A are collected in number needed for the rule learning. Thereby, the rule is learned hereinafter similarly to the method of the conventional active learning system, and data is being selected from the unknown data 32 based on the learned rule. Instead of switching the prediction condition 42 from the input unit 1, by setting in the prediction condition itself the condition that switches to the rule learning when the calculation-use data for which the value of label-1 is A are collected in number equal to or higher than a threshold, it is possible for the processing control means 24 to automatically change the prediction method.

### (2-3) Operation Example-5

If several supplementary data for which the value of label-1 is A can be prepared, using the same in combination with the known data for which the value of label-1 isA, it is possible to perform the prediction using the rule learning from the start of processing.

First, in the initial setting, the known data 31 including only a few data for which the value of label-1 is A and data for which the value of label-1 is B, the unknown data 32 for which the value of label-1 is unknown, and the supplementary data 33 for which the value of label-1 is A are stored in storage unit 3. In addition, the prediction method using the rule learning is specified in the prediction condition 42. The specific label value 46 specifies value A for the label-1. Due to the use of the supplementary data 33, a suitable supplementary condition 41 is to be specified.

When the processing of FIG. 3 is started, the supplementary data for which the value of label-1 is A and the remaining data left after removing a part of the known data 31 including a few data for which the value of label-1 is A and data for which the value of label-1 is B from the known data 31 are created as the calculation-use data, the part of known data being the data for which the descriptor is the same as that of the supplementary data 33 (step S104) . Thereafter, the rule is learned using the calculation-use data 51, and is stored as the rule 71 in storage unit 7 (step S109). Thereafter, the value of label-1 is predicted for the set of unknown data 32 by using the rule 71 (step S110), and the data to be learned next is selected based on the prediction result and data selection condition 43, and is stored in storage unit 7. (step Sill) . Then, this selected data 72 is output to the output unit 8 by the processing control means 24, and the user investigates the value of label-1 of selected data 72 by experiment etc., and inputs the same from the input unit 1 (step S113) . Here, if the data selection condition 43 is one that selects the data of the predicted value close to the desired label value, for example, the probability of this data being the data for which the value of label-1 is A is higher as compared to the case of selection from the set of unknown data 32 at random.

The data update means 25 removes from the unknown data 32 the data for which the value is input to the label-1, to add the same to the known data 31 (step S114).

Operation similar to the above is iterated until the termination condition 44 is satisfied.

According to the present embodiment, even in the situation wherein the rule learning cannot be correctly performed, such as the case wherein there is no desired data or few desired data in the set of known data at the initial stage of start of the learning, the desired data can be more efficiently selected from the set of unknown data as compared to the random selection, whereby the rule learning can be finally

### performed using the desired data.

The reason therefor is that the prediction method that selects, based on the degree of similarity, the data that least resembles data other than the desired data existing in the set of known data enables finding of the desired data more efficiently as compared to the random selection. Another reason is that the prediction method that selects, based on the degree of similarity, the data that most resembles the few existing desired data or the supplementary data that is the pseudo desired data enables finding of the desired data more efficiently as compared to the random selection. Another reason is that use of the supplementary data that is the pseudo desired data enables a meaningful learning.

### [Further example]

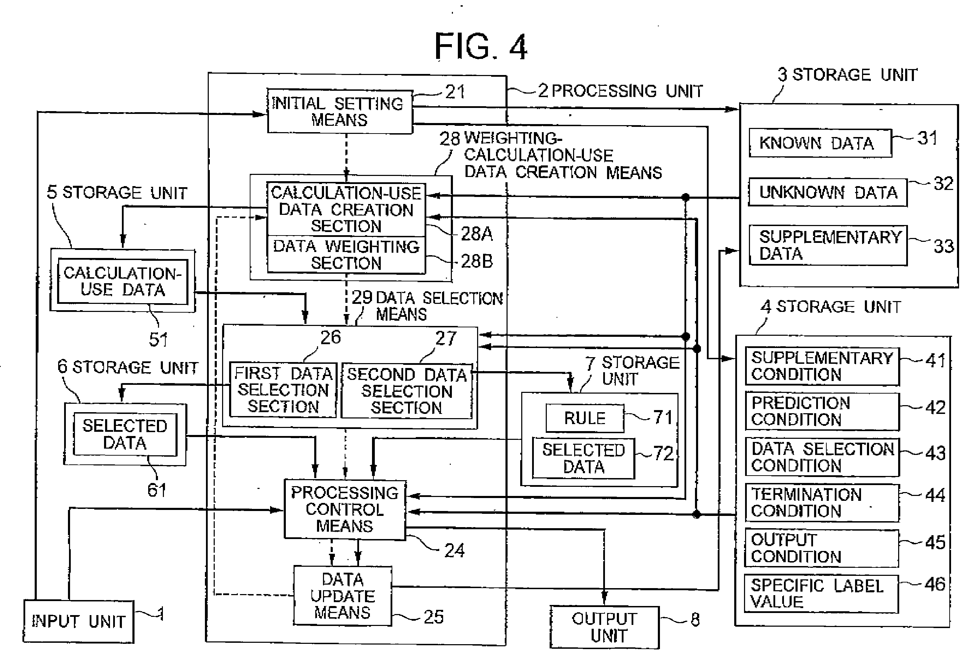

With reference to FIG. 4, an active learning system according to a further example of the present invention includes, differently as compared to the active learning system according to the first exemplary embodiment shown in FIG. 1, weighting-calculation-use data creation means 28 instead of the calculation-use data creation means 22, and data selection means 29 that predicts in consideration of the weighting, instead of the data selection means 23.

The weighting-calculation-use data creation means 28 includes a calculation-use data creation section 28A having a function similar to that of the calculation-use data creation means 22 in the first exemplary embodiment, and a data weighting section 28B that provides a weight to the calculation-use data created by this calculation-use data creation section 28A.

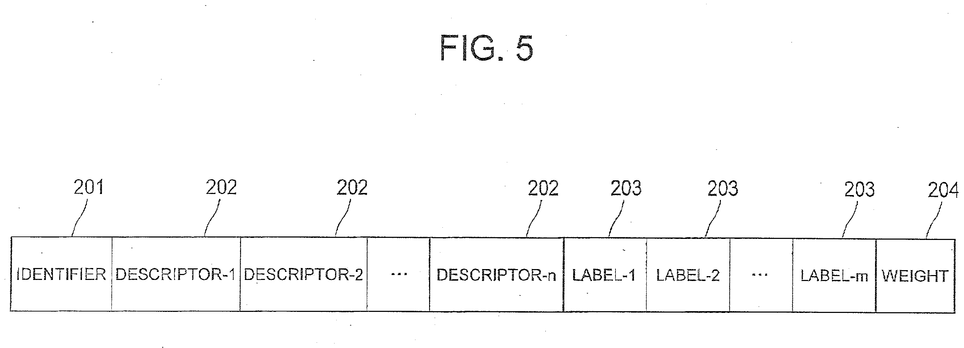

With reference to FIG. 5, an example of the data structure of the weighting-calculation-use data has the structure wherein the item of weight 204 is added to the calculation-use data shown in FIG. 2. The weight 204 has the values from 0 to 1, for example, and the value closer to 1 (a larger value) represents a higher level of the importance.

The data weighting section 28B uses a larger weight with respect to the calculation-use data created from the known data 31 relative to the weight with respect to the calculation-use data created from the supplementary data 33 so that the rule learning and similarity degree calculation is performed while emphasizing the known data 31 over the supplementary data 32. The degree of weight for each item may be specified from outside during the initial setting and calculation in the weighting condition added as one of the control condition, or may be determined in advance such that value "1" is set to the known data, for example, whereas the value of around half thereof is set to the supplementary data.

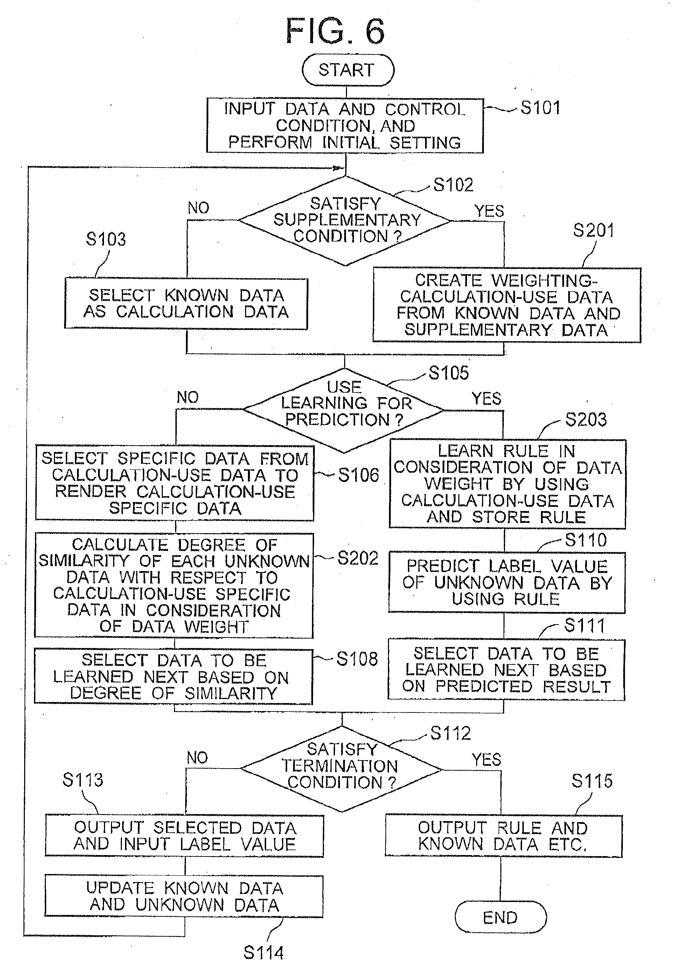

FIG. 6 is a flowchart showing overall operation of the active learning system according to the present embodiment. Hereinafter, operation of the present embodiment will be described with reference to FIGS. 4 to 6. The processing unit 2, upon starting due to an instruction etc. input by the user from the input unit 1, starts the processing shown in the flowchart of FIG. 6.

The initial setting means 21 of the processing unit 2 receives the data and control condition from the input unit 1, and stores the data in storage unit 3 and the control condition in storage unit 4 (step S101 in FIG. 6). Thereafter, the calculation-use data creation section 28A of the weighting-calculation-use data creation means 28 of the processing unit 2 reads the supplementary condition 41 from storage unit 4, judges whether or not the supplementary condition is satisfied (step S102), and if the supplementary condition is not satisfied, delivers the known data 31 read from storage unit 3 to the data weighting section 28B. The data weighting section 28B adds the weight for the known data to the known data 31, and stores the same in storage unit 5 as the calculation-use data 51 (step S103).

On the other hand, if the supplementary condition is satisfied, the calculation-use data creation section 28A reads the known data 31 and supplementary data 33 from storage unit 3, delivers the supplementary data 33 to the data weighting section 28B, whereby the data weighting section 28B adds the weight for supplementary data to the supplementary data 33, and stores the same in storage unit 5 as the calculation-use data 51 (step S201). The calculation-use data creation section 28A delivers the remaining data, left after removing the data having the same descriptor as the supplementary data 33 from the known data 31, to the data weighting section 28B. The data weighting section 28B adds the weight for the known data to the delivered data, performing additional storage of the same in storage unit 5 as the calculation-use data 51 (step S201).

Thereafter, the data selection means 29 of the processing unit 2 reads the prediction condition 42 from storage unit 4, and judges whether the processing is to be performed using the degree, of similarity or the rule learning (step S105). If it is judged to perform the processing using the degree of similarity, the first data selection section 26 is started, whereas if it is judged to perform the processing using the rule learning, the second data selection section 27 is started.

The first data selection section 26 first selects all the data having the label value same as the specific label value 46 from the set of weighting-calculation-use data 51 stored in storage unit 5, to render the calculation-use specific data (step S106) . Thereafter, the degree of similarity with respect to the calculation-use specific data is calculated for each data in the set of unknown data 32 stored in storage unit 3 (step S202). In consideration of the weight during this calculation of the degree of similarity, the degree of similarity is calculated so that the known data 31 is considered to have a higher importance than the supplementary data 33. For example, if there exist descriptors in number equal to n in total, the corresponding n descriptors are compared between the unknown data and the calculation-use specific data, and for example, the value obtained by multiplying a value corresponding to the number of descriptors that coincide therebetween by the weight added to the calculation-use specific data is determined as the degree of similarity. Thereafter, based on the calculated degree of similarity of each unknown data and the data selection condition 43 stored in storage unit 4, the data to be learned next is selected from the set of unknown data 32 as the selected data 61, and is stored in storage unit 6 (step S108).

The second data selection section 27 first learns, for the input of the descriptor of arbitrary data, the rule 71 for calculating the value of specific label of the arbitrary data based on the calculation-use data 51 stored in storage unit 5, and stores the same in storage unit 7 (step S203) . The weight is considered during the rule learning, and the learning is performed so that the known data 31 is considered to have a higher importance than the supplementary data 32. More concretely, in the bagging method, for example, wherein a plurality of rules are created by creating for a plurality of times the data sampled from the calculation-use data, the sampling is performed so that the calculation-use data having a larger weighting value is sampled more easily as compared to the calculation-use data having a smaller weighting value. In a matter of course, the method of differentiating the degree of importance in the learning based on the weight added to the calculation-use data is only an example, and a variety of other methods can be employed. Thereafter, the learned rule 71 is applied to the set of unknown data 32 stored in storage unit 3, to predict the value of the specific label of each unknown data (step S110) . Finally, based on the prediction result of the specific label of each unknown data and the data selection condition 43 stored in storage unit 4, the data to be learned next is selected from the set of unknown data 32 as the selected data 72, and is stored in storage unit 7.

Thereafter, the processing control means 24 of the processing unit 2 reads the termination condition 44 from storage unit 4, to judge whether or not the same is satisfied (step S112) . Then, if the termination condition 44 is not satisfied, the processing control means 24 reads the data selected by the data selection means 29 from storage unit 6 or storage unit 7, outputs the same to the output unit 8, and receives the value of the label of the output data by operation of the input unit 1 by the user (step S113) . Thereafter, the data update means 25 of the processing unit 2 removes from the unknown data 32 the data for which the label value is input, and adds the same to the known data 31 (step S114) . Then, the control is returned to the weighting-calculation-use data creation means 28, and processing similar to that as described above is iterated. On the other hand, if the termination condition 44 is satisfied, in accordance with the output condition 45 stored in storage unit 4, the processing control means 24 of the processing unit 2 outputs the rule 71, known data 31 etc. from the output unit 8 (step S115), and terminates the processing.

According to the present embodiment, due to the configuration wherein the weighting-calculation-use data creation means 28 is provided therein, it is possible to perform the rule learning and calculation of the degree of similarity wherein the known data 31 is considered to have a higher importance than the supplementary data 33. Since the supplementary data, for which the label value is unknown or a label value different from the original label value is set by the user, is not important as compared to the true known data, the processing wherein such a difference can be reflected enables a more efficient prediction.

Although the exemplary embodiment of the present invention is described heretofore, the present invention is not limited to the above exemplary embodiments, and a variety of other additions or alterations are possible. Moreover, in the active learning system of the present invention, the function thereof can be achieved by hardware in a matter of course, and may be achieved by a computer and an active learning-use program. The active learning-use program is provided while being recorded on a computer-readable medium such as a magnetic disc or semiconductor memory, is read by the computer upon starting of the computer, and controls operation of the computer, to cause the computer to function as the initial setting means 21, the calculation-use data creation means 22 or weighting-calculation-use data creation means 28, the data selection means 23 or data selection means 29, the processing control means 24, and the data update means 25, and to perform the processing shown in FIG. 3 and FIG. 6.

In the present invention, the data to be learned next is selected by calculation of the degree of similarity, separately from the data selection using the rule learning that is performed in the conventional active learning system. In order for correctly performing the rule learning, the known data having a variety of label values are needed. However, the selection using the calculation of the degree of similarity enables finding of the desired data more efficiently as compared to the case of random selection, due to selection of the unknown data that least resembles the known data for which the desired label has a value other than the desired value if there exists no data for which the desired label is the desired value as the known data. Moreover, if there exists only a few desired data, the desired data can be found more efficiently as compared to the case of random selection by selecting the unknown data that most resembles the desired data. Furthermore, if there exists no desired data, the data that is estimated by the user to be close to the desire data can be also used as the supplementary data. After the desired data are collected, the prediction using the calculation of the degree of similarity can be shifted to the prediction using the rule learning similar to the conventional one.

According to the active learning system of the above embodiments, even if there exists no data (desired data) or only a few data having a specific label value (desired label value) in the known data, data can be selected more efficiently as compared to the case of the random selection.

The reason therefor is that there is providedmeans for calculating the degree of similarity of the unknown data with respect to the known data to select the data to be learned next. More concretely, finding of the desired data can be performed more efficiently than the random selection, by selecting, from the unknown data, the data that least resembles data other than the desired data existing in the set of the known data, or by selecting the data that most resembles the few existing desired data from the unknown data.

Moreover, the learning is performed more efficiently by using the supplementary information that the user has. The reason therefor is that the calculation of the degree of similarity or,the rule learning can be performed using the supplementary data that is pseudo desired data.

This application is based upon and claims the benefit of priority from Japanese patent application No. 2006-284660 filed on October 19, 2006.

### INDUSTRIAL APPLICABILITY

The present invention can be applied to the use of active learning that performs efficient learning by selecting data from among a larger number of candidate data such as the case of finding active compounds in the stage of screening in the drug design.

## Claims

1. An active learning system comprising:
a storage section (3) for storing a set of data (32) for each of which its label value is unknown, each of said set of data (32) being referred to hereinafter as unknown data, and a set of data (31) for each of which its label value is known and is other than a specific value, each of said set of data (31) being referred to hereinafter as known data;
a first data selection section (26) that calculates a degree of similarity of each of the set of unknown data (32) with respect to the set of known data (31), to select unknown data having a lowest calculated degree of similarity among the set of unknown data (32);
an output section (8) that outputs the selected unknown data;
an input section (1) through which a label value of the selected unknown data is input by a user; and
a data update section (25) that adds, to the set of known data (31), the selected unknown data, and removes the originally unknown data from the set of unknown data (32), thereby updating the set of unknown data (32);
wherein the first data selection section (26) is adapted to repeat the selection with respect to the updated set of unknown data (32),
the active learning system further comprises:
a second data selection section (27) that learns a rule based on a set of data for each of which its label value is known and is said specific value when said set of data, being stored in the storage section (3), is collected, as a result of the repetition of the selection by the first data selection section (26), in number needed for the rule learning, and applies the learned rule to the updated set of unknown data (32), to predict a label value of each unknown data and select unknown data based on the predicted result,
wherein the output section (8) outputs the selected unknown data,
when a label value of the selected unknown data is input through the input section (1) by the user, the data update section (25) is adapted to add, to the set of known data (31), the selected unknown data, and remove the originally stored unknown data from the set of unknown data (32), thereby updating the set of unknown data (32), and
the second data selection section (27) is adapted to repeat the learning with respect to the updated set of unknown data (32) until a termination condition (44) is satisfied

2. An active learning method using a computer comprising:
a) storing, in a storage section (3) of the computer, a set of data (32) for each of which its label value is unknown, each of said set of data (32) being referred to hereinafter as unknown data, and a set of data (31) for each of which its label value is known and is other than a specific value, each of said set of data (31) being referred to hereinafter as known data;
b) calculating a degree of similarity of each of the set of unknown data (32) with respect to the set of known data (31), and selecting unknown data having a lowest calculated degree of similarity among the set of unknown data (32);
c) outputting the selected unknown data;
d) upon user input of a label value of the selected unknown data, adding, to the set of known data (31), the selected unknown data, and removing the originally stored unknown data from the set of unknown data (32), thereby updating the set of unknown data (32);
e) repeating the steps b) to d) with respect to the updated set of unknown data (32);
f) learning a rule based on a set of data for each of which its label value is known and is said specific value when said set of data, being stored in the storage section (3), is collected, as a result of the step e), in number needed for the rule learning;
g) applying the learned rule to the updated set of unknown data (32), predicting a label value of each unknown data, and selecting unknown data based on the predicted result;
h) outputting the selected unknown data;
i) upon user input of a label value of the selected unknown data, adding, to the set of known data (31), the selected unknown data, and removing the originally stored unknown data from the set of unknown data (32), thereby updating the set of unknown data (32); and
j) repeating the steps f) to i) with respect to the updated set of unknown data (32) until a termination condition (44) is satisfied.

3. A program for an active learning method using a computer, said program causes said computer to perform the method according to claim 2.

## Patentansprüche

1. System für aktives Lernen, umfassend:
einen Speicherabschnitt (3) zum Speichern einer Gruppe von Daten (32), für jeweils alle von welchen ihr Labelwert unbekannt ist, wobei auf jeweils alle der Gruppe von Daten (32) hierin nachfolgend als unbekannte Daten Bezug genommen wird, und einer Gruppe von Daten (31), für jeweils alle von welchen ihr Labelwert bekannt ist und anders als ein spezifischer Wert ist, wobei auf jeweils alle der Gruppe von Daten (31) hierin nachfolgend als bekannte Daten Bezug genommen wird;
einen ersten Datenauswahlabschnitt (26), der einen Ähnlichkeitsgrad von jeweils allen der Gruppe von unbekannten Daten (32) in Bezug auf die Gruppe von bekannten Daten (31) berechnet, um unbekannte Daten mit einem niedrigsten berechneten Ähnlichkeitsgrad unter der Gruppe von unbekannten Daten (32) auszuwählen;
einen Ausgabeabschnitt (8), der die ausgewählten unbekannten Daten ausgibt;
einen Eingabeabschnitt (1), durch welchen ein Labelwert der ausgewählten unbekannten Daten durch einen Anwender eingegeben wird; und
einen Datenupdateabschnitt (25), der zu der Gruppe von bekannten Daten (31) die ausgewählten unbekannten Daten hinzufügt und die ursprünglich unbekannten Daten von der Gruppe von unbekannten Daten (32) entfernt, um dadurch die Gruppe von unbekannten Daten (32) upzudaten;
wobei der erste Datenauswahlabschnitt (26) dazu geeignet ist, die Auswahl in Bezug auf die upgedatete Gruppe von unbekannten Daten (32) zu wiederholen,
wobei das System für aktives Lernen weiterhin folgendes umfasst:
einen zweiten Datenauswahlabschnitt (27), der eine Regel basierend auf einer Gruppe von Daten lernt, für jeweils alle von welchen ihr Labelwert bekannt ist und der spezifische Wert ist, wenn die Gruppe von Daten, die im Speicherabschnitt (3) gespeichert ist, gesammelt ist, als ein Ergebnis der Wiederholung der Auswahl durch den ersten Datenauswahlabschnitt (26), in einer Anzahl, die für das Lernen der Regel nötig ist, und die gelernte Regel auf die upgedatete Gruppe von unbekannten Daten (32) anwendet, um einen Labelwert von jeweils allen unbekannten Daten vorherzusagen und unbekannte Daten basierend auf dem vorhergesagten Ergebnis auszuwählen,
wobei der Ausgabeabschnitt (8) die ausgewählten unbekannten Daten ausgibt,
wenn ein Labelwert der ausgewählten unbekannten Daten durch den Eingabeabschnitt (1) durch den Anwender eingegeben wird, der Datenupdateabschnitt (25) dazu geeignet ist, zu der Gruppe von bekannten Daten (31) die ausgewählten unbekannten Daten hinzuzufügen und die ursprünglich gespeicherten unbekannten Daten von der Gruppe von unbekannten Daten (32) zu entfernen, um dadurch die Gruppe von unbekannten Daten (32) upzudaten, und
der zweite Datenauswahlabschnitt (27) dazu geeignet ist, das Lernen in Bezug auf die upgedatete Gruppe von unbekannten Daten (32) zu wiederholen, bis eine Abbruchbedingung (44) erfüllt ist.

2. Verfahren für aktives Lernen unter Verwendung eines Computers, umfassend:
a) Speichern, in einem Speicherabschnitt (3) des Computers, einer Gruppe von Daten (32), für jeweils alle von welchen ihr Labelwert unbekannt ist, wobei auf jeweils alle der Gruppe von Daten (32) hierin nachfolgend als unbekannte Daten Bezug genommen wird, und einer Gruppe von Daten (31), für jeweils alle von welchen ihr Labelwert bekannt ist und anders als ein spezifischer Wert ist, wobei auf jeweils alle der Gruppe von Daten (31) hierin nachfolgend als bekannte Daten Bezug genommen wird;
b) Berechnen eines Ähnlichkeitsgrads von jeweils allen der Gruppe von unbekannten Daten (32) in Bezug auf die Gruppe von bekannten Daten (31) und Auswählen unbekannter Daten mit einem niedrigsten berechneten Ähnlichkeitsgrad unter der Gruppe von unbekannten Daten (32);
c) Ausgeben der ausgewählten unbekannten Daten;
d) auf eine Anwendereingabe eines Labelwerts der ausgewählten unbekannten Daten hin Hinzufügen, zu der Gruppe von bekannten Daten (31), der ausgewählten unbekannten Daten und Entfernen der ursprünglich gespeicherten unbekannten Daten von der Gruppe von unbekannten Daten (32), um dadurch die Gruppe von unbekannten Daten (32) upzudaten;
e) Wiederholen der Schritte b) bis d) in Bezug auf die upgedatete Gruppe von unbekannten Daten (32);
f) Lernen einer Regel basierend auf einer Gruppe von Daten, für jeweils alle von welchen ihr Labelwert bekannt ist und der spezifische Wert ist, wenn die Gruppe von Daten, die im Speicherabschnitt (3) gespeichert ist, gesammelt ist, als ein Ergebnis des Schritts e), in einer Anzahl, die für das Lernen der Regel nötig ist;
g) Anwenden der gelernten Regel auf die upgedatete Gruppe von unbekannten Daten (32), Vorhersagen eines Labelwerts von jeweils allen unbekannten Daten und Auswählen unbekannter Daten basierend auf dem vorhergesagten Ergebnis;
h) Ausgeben der ausgewählten unbekannten Daten;
i) auf eine Anwendereingabe eines Labelwerts der ausgewählten unbekannten Daten hin Hinzufügen, zu der Gruppe von bekannten Daten (31), der ausgewählten unbekannten Daten und Entfernen der ursprünglich gespeicherten unbekannten Daten von der Gruppe von unbekannten Daten (32), um dadurch die Gruppe von unbekannten Daten (32) upzudaten; und
j) Wiederholen der Schritte f) bis i) in Bezug auf die upgedatete Gruppe von unbekannten Daten (32), bis eine Abbruchbedingung (44) erfüllt ist.

3. Programm für ein Verfahren für aktives Lernen unter Verwendung eines Computers, welches Programm veranlasst, dass der Computer das Verfahren nach Anspruch 2 durchführt.

## Revendications

1. Système d'apprentissage actif comprenant :
une section de stockage (3) pour stocker un ensemble de données (32) pour chacune desquelles sa valeur d'étiquette est inconnue, chacune dudit ensemble de données (32) étant désignée ci-après comme données inconnues, et un ensemble de données (31) pour chacune desquelles sa valeur d'étiquette est connue et est autre qu'une valeur spécifique, chacune dudit ensemble de données (31) étant désignée ci-après comme données connues ;
une première section de sélection de données (26) qui calcule un degré de similitude de chacun de l'ensemble de données inconnues (32) par rapport à l'ensemble de données connues (31), pour sélectionner des données inconnues ayant un degré calculé minimal de similitude parmi l'ensemble de données inconnues (32) ;
une section de sortie (8) qui délivre les données inconnues sélectionnées ;
une section d'entrée (1) par laquelle une valeur d'étiquette des données inconnues sélectionnées est entrée par un utilisateur ; et
une section d'actualisation des données (25) qui ajoute, à l'ensemble de données connues (31), les données inconnues sélectionnées, et supprime les données inconnues initialement de l'ensemble de données inconnues (32), actualisant de cette façon l'ensemble de données inconnues (32) ;
dans lequel la section de sélection des premières données (26) est adaptée pour répéter la sélection par rapport à l'ensemble actualisé de données inconnues (32),
le système d'apprentissage actif comprend, en outre :
une deuxième section de sélection des données (27) qui apprend une règle basée sur un ensemble de données pour chacune desquelles sa valeur d'étiquette est connue et est ladite valeur spécifique lorsque ledit ensemble de données, étant enregistré dans la section de stockage (3), est collecté, comme résultat de la répétition de la sélection par la première section de sélection de données (26), en nombre nécessaire pour l'apprentissage de la règle, et applique la règle apprise à l'ensemble actualisé de données inconnues (32), pour prédire une valeur d'étiquette de chacune des données inconnues et sélectionner des données inconnues sur la base du résultat prédit,
dans lequel la section de sortie (8) délivre les données inconnues sélectionnées, lorsqu'une valeur d'étiquette des données inconnues sélectionnées est entrée par la section d'entrée (1) par l'utilisateur, la section d'actualisation des données (25) est adaptée pour ajouter, à l'ensemble de données connues (31), les données inconnues sélectionnées, et supprimer les données inconnues stockées initialement de l'ensemble de données inconnues (32), actualisant de cette façon l'ensemble de données inconnues (32), et
la deuxième section de sélection de données (27) est adaptée pour répéter l'apprentissage par rapport à l'ensemble actualisé de données inconnues (32) jusqu'à ce qu'une condition de cessation (44) soit remplie.

2. Procédé d'apprentissage actif utilisant un ordinateur comprenant :
a) le stockage, dans une section de stockage (3) de l'ordinateur, d'un ensemble de données (32) pour chacune desquelles sa valeur d'étiquette est inconnue, chacune dudit ensemble de données (32) étant désignée ci-après comme données inconnues, et d'un ensemble de données (31) pour chacune desquelles sa valeur d'étiquette est connue et est autre qu'une valeur spécifique, chacune dudit ensemble de données (31) étant désignée ci-après comme données connues ;
b) le calcul d'un degré de similitude de chacune de l'ensemble de données inconnues (32) par rapport à l'ensemble de données connues (31), et la sélection de données inconnues ayant un degré calculé minimal de similitude parmi l'ensemble de données inconnues (32) ;
c) l'émission des données inconnues sélectionnées ;
d) lors de l'entrée par l'utilisateur d'une valeur d'étiquette des données inconnues sélectionnées, l'ajout, à l'ensemble de données connues (31), des données inconnues sélectionnées, et la suppression des données inconnues stockées initialement de l'ensemble de données inconnues (32), actualisant de cette façon l'ensemble de données inconnues (32) ;
e) la répétition des étapes b) à d) par rapport à l'ensemble actualisé de données inconnues (32) ;
f) l'apprentissage d'une règle basée sur un ensemble de données pour chacune desquelles sa valeur d'étiquette est connue et est dite valeur spécifique lorsque ledit ensemble de données, étant stocké dans la section de stockage (3), est collecté, comme résultat de l'étape e), en nombre nécessaire pour l'apprentissage de la règle ;
g) l'application de la règle apprise à l'ensemble actualisé de données inconnues (32), la prédiction d'une valeur d'étiquette de chacune des données inconnues, et la sélection de données inconnues sur la base du résultat prédit ;
h) la délivrance des données inconnues sélectionnées ;
i) lors de l'entrée par l'utilisateur d'une valeur d'étiquette des données inconnues sélectionnées, l'ajout, à l'ensemble de données connues (31), des données inconnues sélectionnées, et la suppression des données inconnues stockées initialement de l'ensemble de données inconnues (32), actualisant de cette façon l'ensemble de données inconnues (32) ; et
j) la répétition des étapes f) à i) par rapport à l'ensemble actualisé de données inconnues (32) jusqu'à ce qu'une condition de cessation (44) soit remplie.

3. Programme pour un procédé d'apprentissage actif utilisant un ordinateur, ledit programme entraîne ledit ordinateur à effectuer le procédé selon la revendication 2.
